# EUROPEAN PATENT APPLICATION

(11) **EP 4 760 481 A1**
(43) Date of publication of application: **17.06.2026**
(21) Application number: 25194811.3
(22) Date of filing: 08.08.2025
(51) Int. Cl.: G06F 3/16, G06F 3/01, G10L 13/02, G10L 15/22, G10L 25/63

(54) **SPEECH PLAYING METHOD, ELECTRONIC DEVICE, AND STORAGE MEDIUM**

(30) Priority: 13.12.2024 CN 202411848865
(71) Applicant: Beijing Zitiao Network Technology Co., Ltd., Beijing 100190 (CN)
(72) Inventor: LI, Xinyu, Beijing, 100028 (CN); YANG, Ju, Beijing, 8006265 (CN); CAI, Wei, Beijing, 100028 (CN); ZHAO, Weize, Beijing, 100028 (CN)
(74) Representative: Marks & Clerk LLP

(57) **Abstract**

The embodiments of the present disclosure provides a speech playing method, an electronic device, and a storage medium, and relate to the field of computer technologies, where the method includes: obtaining first measurement data acquired by a sensor in a case where a user wears a headset; determining a behavior event of the user according to the first measurement data; inputting the behavior event into a pre-trained speech model for processing to obtain inquiry speech information; and playing the inquiry speech information. The present disclosure enables the headset to play inquiry speech information according to the first measurement data acquired by the sensor provided on the headset, and then enables active inquiry of the headset, without the need for the user to manually operate the headset or control the headset by operating a mobile terminal, thereby enabling improvement in control efficiency of the headset and enabling the headset to have an intelligent function of active inquiry.

## Description

### TECHNICAL FIELD

Embodiments of the present disclosure relates to the field of computer technologies, and in particular, to a speech playing method, an electronic device, and a storage medium.

### BACKGROUND

A headset is an electronic device worn on a head of a user, and is generally used for providing various functions such as audio and/or video.

Currently, the headset often interacts with the user wearing the headset in a passive manner, for example, the user needs to manually operate the headset or manually operate a mobile terminal connected with the headset to control the headset to play related content, such as audio and/or video, resulting in problems of inefficiency and insufficient intelligence in controlling the headset.

### SUMMARY

The embodiments of the present disclosure provides a speech playing method and apparatus, device, computer-readable storage medium, and product for solving the problems of inefficiency and insufficient intelligence in controlling a headset in the prior art.

In a first aspect, an embodiment of the present disclosure provides a speech playing method, applied to a headset provided with a sensor, including:
obtaining first measurement data acquired by a sensor in a case where a user wears the headset;
determining a behavior event of the user according to the first measurement data;
inputting the behavior event into a pre-trained speech model for processing to obtain inquiry speech information; and
playing the inquiry speech information.

In a second aspect, an embodiment of the present disclosure provides a speech playing method, applied to a headset provided with a sensor, including:
obtaining first measurement data acquired by a sensor in a case where a user wears the headset;
determining a behavior event of the user according to the first measurement data;
sending a behavior event to a mobile terminal;
receiving inquiry speech information sent from the mobile terminal, where the inquiry speech information is determined by the mobile terminal according to the behavior event; and
playing the inquiry speech information.

In a third aspect, an embodiment of the present disclosure provides a speech playing method, applied to a mobile terminal, including:
receiving a behavior event sent from a headset;
inputting the behavior event into a pre-trained speech model for processing to obtain inquiry speech information; and
sending the inquiry speech information to the headset.

In a fourth aspect, an embodiment of the present disclosure provides a headset provided with a sensor, including:
an obtaining unit configured to obtain first measurement data acquired by the sensor in a case where a user wears the headset;
a determining unit configured to determine a behavior event of the user according to the first measurement data;
a processing unit configured to input the behavior event into a pre-trained speech model for processing to obtain inquiry speech information; and
a playing unit configured to play the inquiry speech information.

In a fifth aspect, an embodiment of the present disclosure provides a headset provided with a sensor, including:
an obtaining unit configured to obtain first measurement data acquired by the sensor in a case where a user wears the headset;
a determining unit configured to determine a behavior event of the user according to the first measurement data;
a sending unit configured to send the behavior event to a mobile terminal;
a receiving unit configured to receive inquiry speech information sent from the mobile terminal, where the inquiry speech information is determined by the mobile terminal according to the behavior event; and
a playing unit configured to play the inquiry speech information.

In a sixth aspect, an embodiment of the present disclosure provides a speech playing apparatus, applied to a mobile terminal, including:
a receiving unit configured to receive a behavior event sent from a headset;
a processing unit configured to input the behavior event into a pre-trained speech model for processing to obtain inquiry speech information; and
a sending unit configured to send the inquiry speech information to the headset.

In a seventh aspect, an embodiment of the present disclosure provides an electronic device, including: a processor and a memory,
where the memory has therein stored computer-executable instructions; and
the processor executes the computer-executable instructions stored in the memory to cause at least one processor to perform the various possible speech playing methods as described above in the first, second, or third aspect.

In an eighth aspect, an embodiment of the present disclosure provides a computer-readable storage medium having therein stored computer-executable instructions which, when executed by a processor, implement the various possible speech playing methods as described above in the first, second, or third aspect.

In a ninth aspect, an embodiment of the present disclosure provides a computer program product, including a computer program which, when executed by a processor, implements the various possible speech playing methods as described above in the first, second, or third aspect.

The speech playing method provided by the embodiment is applied to a headset provided with a sensor, including: obtaining first measurement data acquired by a sensor in a case where a user wears the headset; determining a behavior event of the user according to the first measurement data; inputting the behavior event into a pre-trained speech model for processing to obtain inquiry speech information; and playing the inquiry speech information. The present disclosure enables the headset to play the inquiry speech information according to the first measurement data acquired by the sensor provided on the headset, and then enables active inquiry of the headset, without the need for the user to manually operate the headset or control the headset by operating the mobile terminal, thereby enabling improvement in control efficiency of the headset and enabling the headset to have an intelligent function of active inquiry.

### BRIEF DESCRIPTION OF THE DRAWINGS

In order to more clearly illustrate the technical solutions in the embodiments of the present disclosure or the related art, the drawings that need to be used in the description of the embodiments or the related art will be briefly described below, and it is obvious that the drawings in the following description are some embodiments of the present disclosure, and for one of ordinary skill in the art, other drawings can be obtained according to the drawings without paying inventive labor.
Fig. 1 is an exemplary diagram of an application scene of a speech playing method according to an embodiment of the present disclosure;
Fig. 2 is a flow diagram of a speech playing method according to an embodiment of the present disclosure;
Fig. 3 is a schematic diagram of wearing angles of earphones according to an embodiment of the present disclosure;
Fig. 4 is a flow diagram of another speech playing method according to embodiment of the present disclosure;
Fig. 5 is a flow diagram of yet another speech playing method according to an embodiment of the present disclosure;
Fig. 6 is a structural block diagram of a headset according to an embodiment of the present disclosure;
Fig. 7 is a structural block diagram of another headset according to an embodiment of the present disclosure;
Fig. 8 is a structural block diagram of a speech playing apparatus according to an embodiment of the present disclosure;
Fig. 9 is a schematic structural diagram of an electronic device according to an embodiment of the present disclosure.

### DETAILED DESCRIPTION

To make the objectives, technical solutions and advantages of the embodiments of the present disclosure more apparent, the technical solutions in the embodiments of the present disclosure will be described clearly and completely below with reference to the drawings in the embodiments of the present disclosure, and it is obvious that the described embodiments are some of the embodiments of the present disclosure, but not all of them. All other embodiments, which can be obtained by one of ordinary skill in the art based on the embodiments in the present disclosure without making creative labor, are intended to be within the scope of protection of the present disclosure.

It can be understood that, before the technical solutions disclosed in the embodiments of the present disclosure are used, the type, use range, use scene, etc. of personal information related to the present disclosure all should be notified to a target user and authorized from the target user in a proper manner according to the related laws and regulations.

It can be understood that the above processes of notification and authorization from the target user are only illustrative and not intended to limit the implementation of the present disclosure, and other manners in which the related laws and regulations are satisfied may also be applied to the implementation of the present disclosure.

In the related art, a user controls, by manually operating a mobile terminal connected with a headset, the headset to play audio and/or video contents, or the user needs to perform manual operations such as touching and pressing on the headset to control the headset to play related contents, and for manually operating the headset or controlling the headset by the mobile terminal, there is the problem of control inefficiency; moreover, the headset is incapable of active inquiry of requirements of the user, and needs passive response to the requirements of the user, with insufficient intelligence, thereby limiting the use of the headset.

In order to solve the technical problem, the present disclosure provides a speech playing method, in which a headset is provided with a sensor, first measurement data acquired by the sensor is used, and corresponding processing is performed on the first measurement data, enabling the headset to actively play inquiry speech information for interaction with a user.

It should be noted that the speech playing method according to the present disclosure may be applied to any type of headset.

The speech playing method according to an embodiment of the present disclosure will be described in detail below with reference to the accompanying drawings.

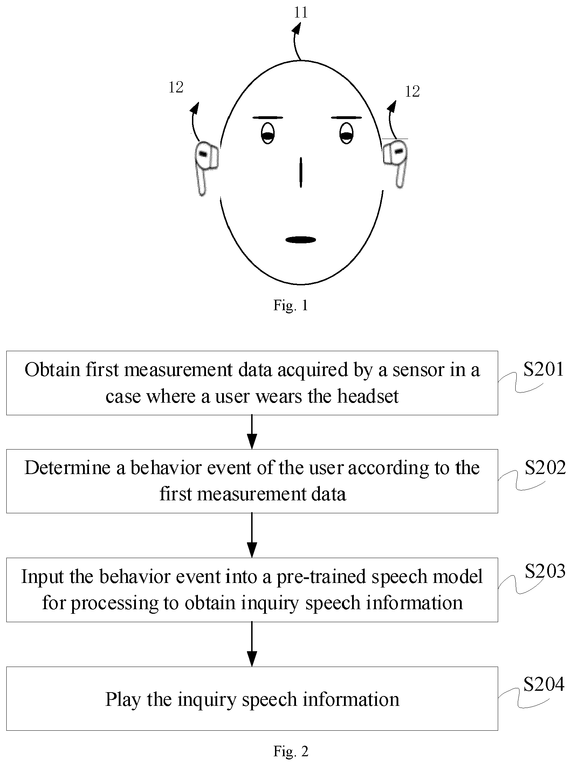

Fig. 1 is an exemplary diagram of an application scene of a speech playing method according to an embodiment of the present disclosure. As shown in Fig. 1, a user wears a headset 12 on a head 11, where the headset 12 is provided with a sensor, and may play related inquiry speech information according to data acquired by the sensor for interaction with the user.

Fig. 1 is only an exemplary application scenario which is applicable in any headset, where the present disclosure does not limit the type of headset.

Fig. 2 is a flow diagram of a speech playing method according to an embodiment of the present disclosure, where the speech playing method is applied to a headset, and may include the following steps S201-S204.

In step S201, first measurement data is acquired by a sensor in a case where a user wears the headset.

In the present disclosure, the headset includes: one of a head-mounted display, earphones provided with cameras, or eyeglasses provided with cameras. The head-mounted display is, for example, VR (Virtual Reality), XR (Extended Reality), MR (Mixed Reality), AR (Augmented Reality) eyeglasses, and the like.

Further, the headset may perform wearing detection. When the user wears the headset, a wearing angle of the headset may be displayed on a preview image to prompt the user to correctly wear the headset. In addition, if the headset is a pair of earphones, it may be determined, by detection of wearing attitudes of dual earphones, whether the two earphones are in a wearing state. In the present disclosure, the user may be reminded in a case where a difference between wearing angles of the two earphones is greater than a preset angle threshold.

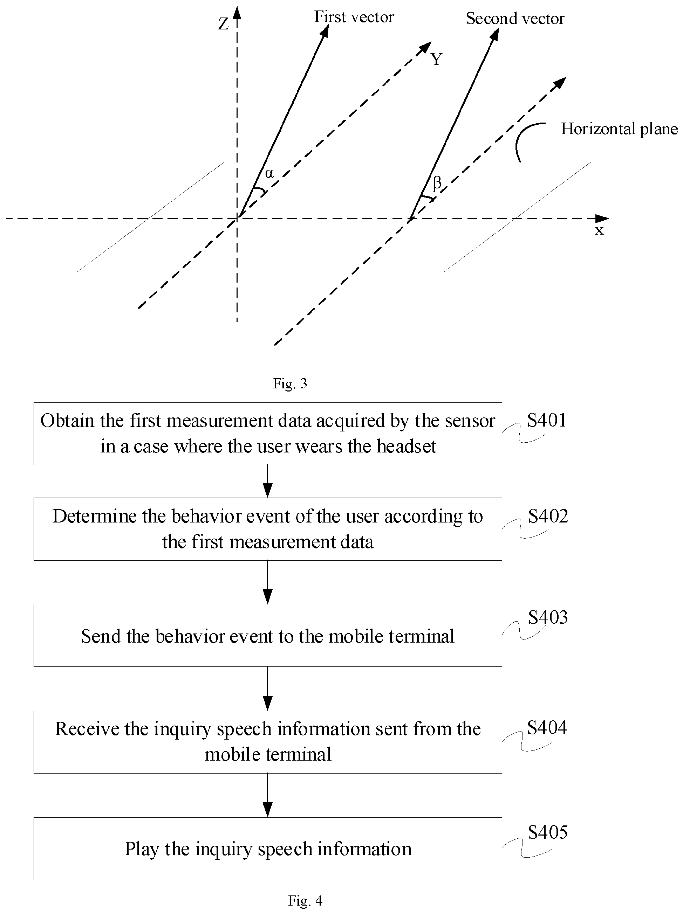

It can be appreciated that in a case where the headset is a pair of earphones, it is required that, when they are first worn, a first angle α of a left earphone and a second angle β of a right earphone meet α and β both being greater than a first angle threshold and less than a second angle threshold, and an absolute value of a difference between α and β being less than the second angle threshold, where the first angle threshold is, for example, -10°, and the second angle threshold is, for example, 10°. In the present disclosure, it is required that detection is performed when the user wearing the left earphone and the right earphone looks straight ahead, and referring to Fig. 3, the first angle refers to an included angle between a first vector representing a wearing direction of the left earphone when worn and a horizontal plane. The second angle refers to an included angle between a second vector representing a wearing direction of the right earphone when worn and the horizontal plane.

The headset is provided with a sensor. It can be understood that the sensor includes an inertial measurement unit (IMU), and the first measurement data includes first inertial measurement data. The first inertial measurement data includes: three-axis attitude angles and accelerations.

In the present disclosure, the sensor may be one or more, and the sensor may also be another sensor, such as a pressure sensor, a speed sensor, and an angle sensor, which is not limited in the present disclosure.

In step S202, a behavior event of the user is determined according to the first measurement data.

In the embodiment of the present disclosure, a detection algorithm for determining the behavior event of the user according to the first measurement data may be deployed on the headset side, or on a mobile terminal side. If the detection algorithm is deployed on the headset side, the headset determines the behavior event of the user according to the first measurement data. If the detection algorithm is deployed on the mobile terminal side, the headset transmits the first measurement data to the mobile terminal, and the mobile terminal determines the behavior event of the user according to the first measurement data.

The detection algorithm may be a pre-trained neural network model for the determination of the behavior event. The detection algorithm may also be another algorithm, which is not limited.

In the embodiment of the present disclosure, the behavior event of the user includes: a running event, falling event, lying event, walking event, sedentariness event, and the like.

For example, if the first inertial measurement data includes: speed of the user, if the speed is greater than a first speed threshold (e.g., 6km/h), and a duration of the speed of the user being greater than the first speed threshold exceeds a first time threshold (e.g., 5 minutes), it can be determined that the behavior event of the user is a running event. If the speed of the user is less than a second speed threshold (e.g. 4 km/h), and a duration of the speed of the user being less than the second speed threshold exceeds a first time threshold (e.g. 5 minutes), it can be determined that the behavior event of the user is a walking event.

In the embodiment of the present disclosure, the first inertia measurement data includes: attitude data of the user, and the falling event, the flat lying event, or the sedentariness event of the user are determined according to the attitude data of the user, where the falling event includes: one of a forward falling event, a backward falling event, a leftward falling event, or a rightward falling event. The flat lying event includes: flat lying on any object, for example, flat lying on the ground or a pillow. If it is detected that a time that the user is sitting is greater than a second time threshold, sedentariness may be determined, where the second time threshold is, for example, 1 hour.

In the embodiment of the present disclosure, after the behavior event is determined, it is determined that the behavior event is started, and after the behavior event is started, subsequent steps are performed. After the behavior event is ended, it is determined that the behavior event is ended, and after the behavior event is ended, detection can be continued to determine whether there is another behavior event subsequently.

It can be understood that, in a case where the detection algorithm is run on the headset, which is a pair of earphones, one in the two earphones is a master earphone, and the other is a slave earphone, where the detection algorithm may be run on the slave earphone to improve the detection efficiency.

In one embodiment, the determining the behavior event of the user according to the first measurement data includes: determining the behavior event of the user according to a first image and the first measurement data.

The headset may be provided with a camera, which is used for performing image acquisition on an environment where the user is located to obtain the first image, where by the detection algorithm, the behavior event of the user may be determined according to the first image and the first measurement data to improve the accuracy of determining the behavior event.

It can be understood that if the camera on the headset is in a wake-up state and is configured by the user to continuously acquire images, the behavior event of the user may be determined according to the first image and the first measurement data. If the camera is not in the wake-up state or does not acquire images, the behavior event can be determined according to the first measurement data.

In another embodiment, the determining the behavior event of the user according to the first measurement data includes: obtaining second measurement data acquired by a mobile terminal, where the user carries the mobile terminal; and determining the behavior event of the user according to the first measurement data and the second measurement data.

In the embodiment of the present disclosure, the mobile terminal is also deployed with the sensor, where the sensor is used for acquiring the second measurement data, the sensor may be an inertial measurement unit, and the second measurement data includes second inertial measurement data. The mobile terminal sends the acquired second measurement data to the headset, and the headset may determine the behavior event of the user according to the first measurement data and the second measurement data to improve the accuracy of determining the behavior event.

In step S203, the behavior event is inputted into a pre-trained speech model for processing to obtain inquiry speech information.

In the present disclosure, the behavior event are input into the speech model as a prompt.

Context information of the user includes historical speech information and/or a historical behavior event. The historical speech information is speech information of the user during an interaction of the user with the headset in history. The historical behavior event is a behavior event determined by the headset in history.

In one embodiment, the speech model is capable of recording the context information of the user, and the inputting the behavior event into the pre-trained speech model for processing to obtain inquiry speech information, including: processing, by the speech model, the behavior event to obtain inquiry speech information by using the context information, after the behavior event are input into the pre-trained speech model.

The speech model may be an LLM (Large Language Model) deployed in the headset, and the speech model is a pre-trained multimodal language model, and may process the context information and the behavior event to obtain the inquiry speech information. The inquiry speech information is information associated with the behavior event.

For example, the event type is "running event", the inquiry speech information is "My owner, are you running? There are several running songs in the top list recommended to you here". The event type is "falling event", and the inquiry speech information is "My owner, do you need help?". The event type is "lying event", and the inquiry speech information is "Do you need a relaxing music?".

In one embodiment, the headset is deployed with a camera, and the inputting the behavior event into the pre-trained speech model for processing to obtain the inquiry speech information including: obtaining position information of the user or a first image acquired by the camera; and inputting the first image and/or the position information as well as the behavior event into the speech model for processing to obtain the inquiry speech information.

In the embodiment of the present disclosure, the user may interact with the headset, the camera is awakened based on the speech information of the user, and the camera is controlled to acquire the first image according to the speech information of the user. For example, if the speech information of the user is "XX, what is in front", the camera can be controlled to shoot a scene in front of the user. If the speech information of the user is "XX, what is on the left", the camera can be controlled to shoot a scene on the left of the user. If the speech information of the user is "XX, what car is in front", the camera can be controlled to shoot the car in front of the user and focus on the car in the shooting process. In the embodiment of the present disclosure, the camera may be awakened in various ways to acquire the first image, which is not limited herein.

Further, the headset may be in communication connection with the mobile terminal, the mobile terminal may locate the position information of the user, such as GPS (Global Positioning System) information, and the speech model may, based on the position information of the user and the behavior event, determine the inquiry speech information, such as "There is a gourmet food store 20m ahead of you, and do you need to go there?". In the embodiment of the present disclosure, the speech model may process at least one of the position information, the first image, or the context, as well as the event type to determine the inquiry speech information. What is input into the speech model may further include information such as a speed of the user, for more accurately determining the inquiry speech information.

In step S204, the inquiry speech information is played.

In the embodiment of the present disclosure, the headset may play the inquiry speech information by using a speaker.

Further, after playing the inquiry speech information, the method further includes: obtaining reply information of the user for the inquiry speech information; and determining target data according to the reply information, and playing the target data.

In the embodiment of the present disclosure, after the inquiry speech information is played, the user makes a reply for the inquiry speech information, and the headset may determine the target data according to the reply information and play the target data. The target data may be speech data for continuous interaction with the user, or audio data such as music, or video data. The type of the target data is not limited in the present disclosure.

The obtaining the reply information of the user for the inquiry speech information includes: obtaining third measurement data acquired by the sensor; determining a head action of the user according to the third measurement data; and determining the reply information of the user for the inquiry speech information according to the head action; or acquiring speech information of the user as the reply information.

In the embodiment of the present disclosure, the head action includes nodding or headshaking, where reply information corresponding to the nodding indicates confirmation of the inquiry speech information, for example, the reply information can be "Sure", "Ok", or "All right", etc., and reply information corresponding to the headshaking indicates "negation" of the inquiry speech information, such as "No need", "Change type", and "Change subject". For example, if the inquiry speech information is "My owner, are you running? There are several running songs in the top list recommended to you here", if the head action of the user is nodding, played target data is the corresponding running songs in the top list, and if the head action of the user is headshaking, inquiry speech information can be re-determined, such as "My owner, what type of song do you need to listen to?" or "My owner, will you listen to a new song?", played target data is re-determined inquiry speech information. If the inquiry speech information is "My owner, do you need help?", if the head action of the user is nodding, target data that can be determined is, for example, "There is a hospital in the vicinity of 200m.", and if the head action of the user is headshaking, target data that can be determined is continuing playing of the current data.

In the embodiment of the present disclosure, it may be preset that a preset number of head actions are detected before the reply information is determined according to the head action, for example, the reply information is determined only when consecutively nodding or headshaking twice is detected.

In addition, the user may also reply to the inquiry speech information by a speech directly, such as "Yes", "No", or "Play YY music". The user can reply with any content to control the headset to play audio or video data or to converse with the headset.

In one embodiment, the playing the target data includes: determining a playing volume according to the behavior event; and playing the target data according to the playing volume.

In the embodiment of the present disclosure, the user needs different playing volumes in different behavior events, for example, a playing volume corresponding to the running event is higher, and a playing volume corresponding to the flat lying event is lower.

In one embodiment, the determining the playing volume according to the behavior event includes: obtaining noise data of a current environment; and determining the playing volume according to the noise data and the behavior event.

In the embodiment of the present disclosure, environmental noise also affects the playing volume, where under the same behavior event, the higher the environmental noise is, the higher the playing volume is.

In one embodiment, the headset is deployed with a camera, and the determining the playing volume according to the behavior event includes: determining a head-turning event of the user according to the first measurement data and/or a first image acquired by the camera; and determining the playing volume according to the head-turning event and the behavior event.

The head-turning event includes a leftward head-turning event or a rightward head-turning event. If the user turns his head, the user can watch other targets or converse with others, then the playing volume may be reduced.

In the present disclosure, the detection algorithm for the event type and/or the speech model can be deployed in the headset, the mobile terminal, or a cloud server, which is not limited. If the detection algorithm is deployed on the mobile terminal, the headset can interact with the mobile terminal to determine the event type, and if the detection algorithm is deployed on the cloud server, the headset can interact with the cloud server to determine the event type. If the speech model is deployed on the mobile terminal, the headset can interact with the mobile terminal to determine the inquiry speech information, and if the speech model is deployed on the cloud server, the headset can interact with the cloud server to determine the inquiry speech information.

In the present disclosure, the headset is deployed with the sensor, the behavior event of the user can be determined by detecting the measurement data acquired by the sensor, and then the inquiry speech information can be output in combination with the speech model, to implement active inquiry of the headset with the user and further implement active conversation. In addition, by the camera provided on the headset, the first image is acquired, and the inquiry speech information can be more accurately determined in combination with the first image. Then, in the present disclosure, the event type can be accurately determined in combination with the first image and/or the measurement data acquired by the mobile terminal. Finally, by processing the context data and using the behavior event as the prompt, the speech model can output the inquiry speech information more accurately, and the user experience is improved. In conclusion, the present disclosure enables manual operation of the headset by the user or control of the headset by operating the mobile terminal to be avoided, and by direct interaction between the user and the headset, enables improvement in the control efficiency of the headset and enables the headset to have an intelligent function of active inquiry.

Fig. 4 is a flow diagram of another speech playing method according to an embodiment of the present disclosure, which is applied to the headset provided with the sensor, and specifically includes the following steps S401-S405.

In step S401, the first measurement data acquired by the sensor is obtained in a case where the user wears the headset.

For a specific implementation of this step, reference is made to S201, which is not repeated herein.

In step S402, the behavior event of the user is determined according to the first measurement data.

For a specific implementation of this step, reference is made to S202, which is not repeated herein.

In step S403, the behavior event is sent to the mobile terminal.

In the embodiment of the present disclosure, the headset, which is in communication connection with the mobile terminal, sends the behavior event to the mobile terminal to cause the mobile terminal to determine inquiry speech information according to the behavior event, and for the manner in which the mobile terminal determines the inquiry speech information, reference can be made to S203, which is not repeated herein.

In one embodiment, the headset is deployed with the camera, and the method further includes: acquiring the first image acquired by the camera; and sending the first image to the mobile terminal, where the inquiry speech information is determined by the mobile terminal according to the behavior event and the first image.

Specifically, when sending the behavior event to the mobile terminal, the headset may also send the first image, and for specific acquisition of the first image, reference is made to the foregoing embodiment, which is not repeated herein. For the manner in which the mobile terminal determines the inquiry speech information according to the behavior event and the first image, reference can be made to S203, which is not repeated herein.

In step S404, the inquiry speech information sent from the mobile terminal is received.

After determining the inquiry speech information, the mobile terminal may send the inquiry speech information to the headset.

S405, In step S405, the inquiry speech information is played.

For a specific implementation of this step, reference is made to S204, which is not repeated herein.

It can be seen that the embodiment of the present disclosure enables speech interaction of the headset with the user, where the speech model is deployed on the mobile terminal side, and after the inquiry speech information is determined by the mobile terminal side according to the event type, the inquiry speech information is played by the headset.

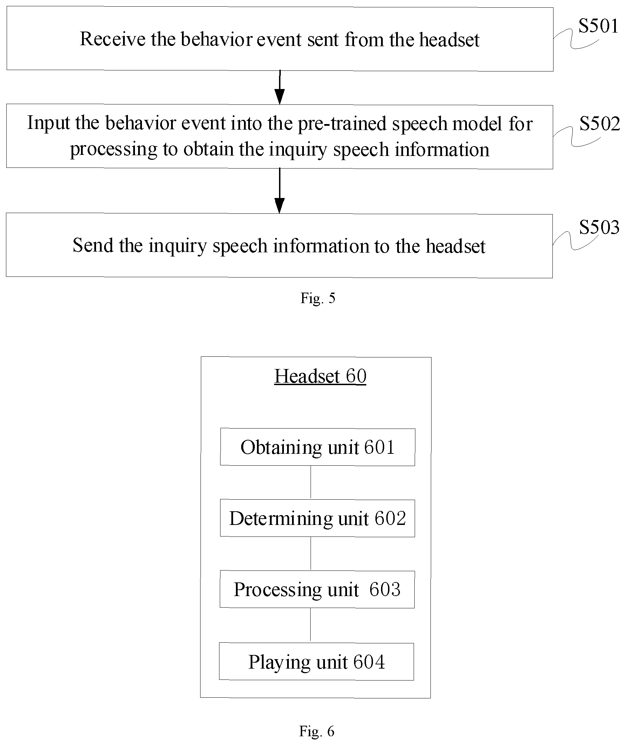

Fig. 5 is a flow diagram of yet another speech playing method according to an embodiment of the present disclosure, which is applied to a mobile terminal and specifically includes the following steps S501-S502.

In step S501, the behavior event sent from the headset is received.

In step S502, the behavior event is inputted into the pre-trained speech model for processing to obtain the inquiry speech information.

In an embodiment, the inputting the behavior event into the pre-trained speech model for processing to obtain the inquiry speech information includes: obtaining the position information of the user; receiving the first image sent from the headset, where the first image is acquired by the camera on the headset; and inputting the first image and/or the position information as well as the behavior event into the speech model for processing to obtain the inquiry speech information.

For a specific implementation of this step, reference is made to S203, which is not repeated herein.

In step S503, the inquiry speech information is sent to the headset.

In the embodiment of the present disclosure, the speech model is deployed in the mobile terminal, and the speech model deployed in the mobile terminal can determine inquiry speech information according to a behavior event sent from a headset, to cause the headset to play the inquiry speech information, thereby improving the control efficiency of the headset and increasing the function of active inquiry of the headset.

Fig. 6 is a schematic structural diagram of a headset according to an embodiment of the present disclosure, where the headset 60 is provided with a sensor and may include the following units:
an obtaining unit 601 configured to obtain first measurement data acquired by the sensor in a case where a user wears the headset;
a determining unit 602 configured to determine a behavior event of the user according to the first measurement data;
a processing unit 603 configured to input the behavior event into a pre-trained speech model for processing to obtain inquiry speech information; and
a playing unit 604 configured to play the inquiry speech information.

In an option embodiment, the headset includes: one of a head-mounted display, earphones provided with cameras, or eyeglasses provided with cameras.

In an option embodiment, the sensor includes an inertial measurement unit, and the first measurement data includes first inertial measurement data.

In an option embodiment, the behavior event is input into the speech model as a prompt.

In an option embodiment, the speech model is capable of recording context information of the user, and the processing unit 603 is specifically configured to: process, by the speech model, the behavior event to obtain the inquiry speech information by using the context information after the behavior event is input into the pre-trained speech model.

In an option embodiment, the context information of the user includes historical speech information and/or a historical behavior event.

In an optional embodiment, the headset is deployed with a camera, and the processing unit 603 is specifically configured to: obtain position information of the user or a first image acquired by the camera; and input the first image and/or the position information as well as the behavior event into the speech model for processing to obtain the inquiry speech information.

In an option embodiment, the determining unit 602 is specifically configured to determine the behavior event of the user according to the first image and the first measurement data.

In an optional embodiment, the determining unit 602 is specifically configured to obtain second measurement data acquired by a mobile terminal, where the user carries the mobile terminal; and determine the behavior event of the user according to the first measurement data and the second measurement data.

In an option embodiment, after the playing the inquiry speech information, the obtaining unit 601 is further configured to obtain reply information of the user for the inquiry speech information; and the headset further includes: a playing unit (not shown) configured to determine target data according to the reply information, and play the target data.

In an option embodiment, in a case where the obtaining unit 601 obtains the reply information of the user for the inquiry speech information, the obtaining unit 601 is specifically configured to: obtain third measurement data acquired by the sensor, determine a head action of the user according to the third measurement data, and determine the reply information of the user for the inquiry speech information according to the head action; or, acquire speech information of the user as the reply information.

In an optional embodiment, in a case where the playing unit plays the target data, the playing unit is specifically configured to: determine a playing volume according to the behavior event; and play the target data according to the playing volume.

In an optional embodiment, in a case where the playing unit determines the playing volume according to the behavior event, the playing unit is specifically configured to: obtain noise data of a current environment; and determine the playing volume according to the noise data and the behavior event.

In an optional embodiment, the headset is deployed with the camera, and in a case where the headset determines the playing volume according to the behavior event, the playing unit is specifically configured to: determine a head-turning event of the user according to the first measurement data and/or a first image acquired by the camera; and determine the playing volume according to the head-turning event and the behavior event.

For the specific implementation of the headset provided in the embodiment of the present disclosure, reference can be made to the embodiment of the speech playing method, which is not repeated herein.

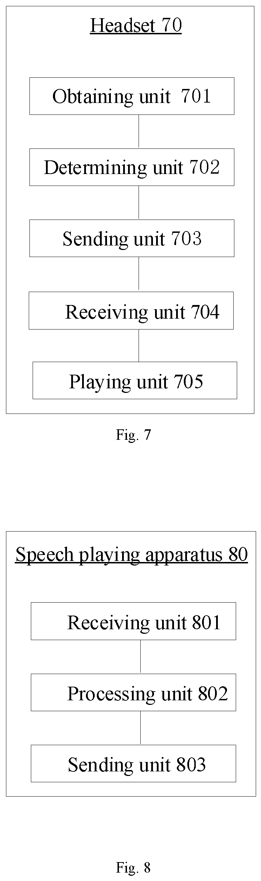

Fig. 7 is a schematic structural diagram of a headset according to an embodiment of the present disclosure, where the headset 70 is provided with a sensor, and may include the following units:
an obtaining unit 701 configured to obtain first measurement data acquired by the sensor in a case where a user wears the headset;
a determining unit 702 configured to determine a behavior event of the user according to the first measurement data;
a sending unit 703 configured to send the behavior event to a mobile terminal;
a receiving unit 704 configured to receive inquiry speech information sent from the mobile terminal, where the inquiry speech information is determined by the mobile terminal according to the behavior event; and
a playing unit 705 configured to play the inquiry speech information.

In an option embodiment, the headset is deployed with a camera, the obtaining unit 701 is further configured to obtain a first image acquired by the camera; and the sending unit 703 is further configured to send the first image to the mobile terminal, where the inquiry speech information is determined by the mobile terminal according to the behavior event and the first image.

For the specific implementation of the headset provided in the embodiment of the present disclosure, reference can be made to the embodiment of the speech playing method, which is not repeated herein.

Fig. 8 is a schematic structural diagram of a speech playing apparatus according to an embodiment of the present disclosure, where the speech playing apparatus 80 may include the following units:
a receiving unit 801 configured to receive a behavior event sent from a headset;
a processing unit 802 configured to input a behavior event into a pre-trained speech model for processing to obtain inquiry speech information; and
a sending unit 803 configured to send the inquiry speech information to the headset.

In an option embodiment, the processing unit 802 is specifically configured to: obtain position information of a user; receive a first image sent from the headset, where the first image is acquired by a camera on the headset; and input the first image and/or the position information as well as the behavior event into the speech model for processing to obtain the inquiry speech information.

For the specific implementation of the speech playing apparatus provided in the embodiment of the present disclosure, reference can be made to the embodiment of the speech playing method, which is not repeated herein.

In order to implement the foregoing embodiments, an embodiment of the present disclosure further provides a computer-readable storage medium having therein stored computer-executable instructions which, when executed by a processor, implement the speech playing method according to any of the foregoing embodiments.

In order to implement the foregoing embodiments, an embodiment of the present disclosure further provides a computer program product, including a computer program which, when executed by a processor, implements the speech playing method according to any of the foregoing embodiments.

In order to implement the foregoing embodiment, an embodiment of the present disclosure further provides an electronic device, including: a processor and a memory, where the memory has therein stored computer-executable instructions; and the processor executes the computer-executable instructions stored in the memory to cause the processor to perform the speech playing method according to any of the foregoing embodiments.

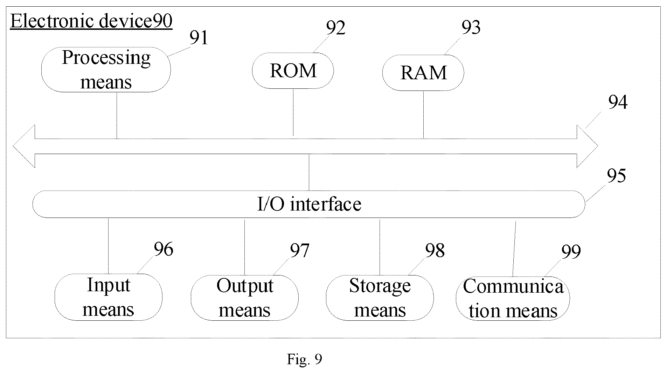

Fig. 9 is a schematic structural diagram of an electronic device according to an embodiment of the present disclosure, where the electronic device 90 may be a terminal device or server. The terminal Device may include, but is not limited to, a mobile terminal such as a mobile phone, laptop, digital broadcast receiver, personal digital assistant (PDA for short), portable android device (PAD for short), portable multimedia player (PMP for short), and vehicle-mounted navigation terminal (e.g., vehicle-mounted navigation terminal), and a fixed terminal such as a digital TV and desk computer. The electronic device shown in Fig. 9 is only an example, and should not bring any limitation to the functions and the use range of the embodiment of the present disclosure.

As shown in Fig. 9, the electronic device 90 may include a processing means (e.g., a central processing unit, graphics processing unit, etc.) 91, which may perform various suitable actions and processes according to a program stored in a read only memory (ROM for short) 92 or a program loaded from a storage means 98 into a random access memory (RAM for short) 93. In the RAM 93, various programs and data required for the operation of the electronic device 90 are also stored. The processing means 91, the ROM 92, and the RAM 93 are connected to each other by a bus 94. An input/output (I/O) interface 95 is also connected to the bus 94.

Generally, the following means may be connected to the I/O interface 95: an input means 96 including, for example, a touch screen, touchpad, keyboard, mouse, camera, microphone, accelerometer, gyroscope, etc.; an output means 97 including, for example, a liquid crystal display (LCD for short), speaker, vibrator, etc.; the storage means 98 including, for example, a magnetic tape, hard disk, etc.; and a communication means 99. The communication means 99 may allow the electronic device 90 to communicate with other devices wirelessly or by wire to exchange data. While Fig. 9 illustrates the electronic device 90 having various means, it should be understood that there is no requirement that all illustrated means are implemented or provided. More or fewer means may be alternatively implemented or provided.

In particular, according to embodiments of the present disclosure, the processes described above with reference to the flow diagrams may be implemented as a computer software programs. For example, an embodiment of the present disclosure includes a computer program product, including a computer program carried on a computer-readable medium, the computer program including program code for performing the method illustrated by the flow diagram. In such an embodiment, the computer program may be downloaded and installed from a network via the communication means 99, or installed from the storage means 98, or installed from the ROM 92. The computer program, when executed by the processing means 91, performs the above functions defined in the method of the embodiment of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, portable computer diskette, hard disk, random access memory (RAM), read only memory (ROM), erasable programmable read-only memory (EPROM or flash memory), optical fiber, portable compact disc read-only memory (CD-ROM), optical storage device, magnetic storage device, or any suitable combination of the foregoing. In the present disclosure, the computer-readable storage medium may be any tangible medium containing or storing a program, where the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, where the computer-readable signal medium can send, propagate, or transmit a program for use by or in conjunction with an instruction execution system, apparatus, or device. The program code contained on the computer-readable medium may be transmitted using any appropriate medium, including but not limited to: a wire, optical cable, RF (Radio Frequency), etc., or any suitable combination of the foregoing.

The above computer-readable medium may be contained in the above electronic device; or may exist separately without being assembled into the electronic device.

The above computer-readable medium has thereon carried one or more programs which, when executed by the electronic device, cause the electronic device to perform the method shown in the above embodiments.

Computer program code for performing the operation of the present disclosure may be written in one or more programming languages or a combination thereof, where the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any type of network, including a local area network (LAN for short) or a wide area network (WAN for short), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit does not, in some cases, constitute a limitation on the unit itself, for example, the first obtaining unit may also be described as "a unit obtaining at least two internet protocol addresses".

The functions described above herein may be executed, at least partially, by one or more hardware logic components. For example, without limitation, a hardware logic component of an exemplary type that may be used includes: a field programmable gate array (FPGA), application specific integrated circuit (ASIC), application specific standard product (ASSP), system on chip (SOC), complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, portable computer diskette, hard disk, random access memory (RAM), read only memory (ROM), erasable programmable read only memory (EPROM or flash memory), optical fiber, portable compact disc read only memory (CD-ROM), optical storage device, magnetic storage device, or any suitable combination of the foregoing.

In a first aspect, according to one or more embodiments of the present disclosure, there is provided a speech playing method, applied to a headset provided with a sensor, including:
obtaining first measurement data acquired by the sensor in a case where a user wears the headset;
determining a behavior event of the user according to the first measurement data;
inputting the behavior event into a pre-trained speech model for processing to obtain inquiry speech information; and
playing the inquiry speech information.

According to one or more embodiments of the present disclosure, the sensor includes an inertial measurement unit, and the first measurement data includes first inertial measurement data.

According to one or more embodiments of the present disclosure, the behavior event is input into the speech model as a prompt.

According to one or more embodiments of the present disclosure, the speech model is capable of recording context information of the user, and the inputting the behavior event into a pre-trained speech model for processing to obtain inquiry speech information includes: processing, by the speech model, the behavior event to obtain the inquiry speech information by using the context information after the behavior event is input into the pre-trained speech model.

According to one or more embodiments of the present disclosure, the context information of the user includes historical speech information and/or a historical behavior event.

According to one or more embodiments of the present disclosure, the headset is deployed with a camera, and the inputting the behavior event into a pre-trained speech model for processing to obtain inquiry speech information includes:
obtaining position information of the user or a first image acquired by the camera; and
inputting the first image and/or the position information as well as the behavior event into the speech model for processing to obtain the inquiry speech information.

According to one or more embodiments of the present disclosure, the determining the behavior event of the user according to the first measurement data includes:
determining the behavior event of the user according to the first image and the first measurement data.

According to one or more embodiments of the present disclosure, the determining the behavior event of the user according to the first measurement data includes:
obtaining second measurement data acquired by a mobile terminal which is carried by the user; and
determining the behavior event of the user according to the first measurement data and the second measurement data.

According to one or more embodiments of the present disclosure, the speech playing method further comprises, after the playing the inquiry speech information:
obtaining reply information of the user for the inquiry speech information; and
determining target data according to the reply information, and playing the target data.

According to one or more embodiments of the present disclosure, the obtaining reply information of the user for the inquiry speech information includes: obtaining third measurement data acquired by the sensor, determining a head action of the user according to the third measurement data, and determining the reply information of the user for the inquiry speech information according to the head action; or
acquiring speech information of the user as the reply information.

According to one or more embodiments of the present disclosure, the playing the target data includes:
determining a playing volume according to the behavior event; and
playing the target data according to the playing volume.

According to one or more embodiments of the present disclosure, the determining the playing volume according to the behavior event includes:
obtaining noise data of a current environment; and
determining the playing volume according to the noise data and the behavior event.

According to one or more embodiments of the present disclosure, the headset is deployed with a camera, and the determining the playing volume according to the behavior event includes:
determining a head-turning event of the user according to the first measurement data and/or a first image acquired by the camera; and
determining the playing volume according to the head-turning event and the behavior event.

In a second aspect, according to one or more embodiments of the present disclosure, there is provided a speech playing method, applied to a headset provided with a sensor, including:
obtaining first measurement data acquired by a sensor in a case where a user wears the headset;
determining a behavior event of the user according to the first measurement data;
sending the behavior event to a mobile terminal;
receiving inquiry speech information sent from the mobile terminal, where the inquiry speech information is determined by the mobile terminal according to the behavior event; and
playing the inquiry speech information.

According to one or more embodiments of the present disclosure, the headset is deployed with a camera, and the speech playing method further includes:
obtaining a first image acquired by the camera; and
sending the first image to the mobile terminal, where the inquiry speech information is determined by the mobile terminal according to the behavior event and the first image.

In a third aspect, according to one or more embodiments of the present disclosure, there is provided a speech playing method, applied to a mobile terminal, including:
receiving a behavior event sent from a headset;
inputting the behavior event into a pre-trained speech model for processing to obtain inquiry speech information; and
sending the inquiry speech information to the headset.

According to one or more embodiments of the present disclosure, the inputting the behavior event into the pre-trained speech model for processing to obtain inquiry speech information includes:
obtaining position information of a user;
receiving a first image sent from the headset, where the first image is acquired by a camera on the headset; and
inputting the first image and/or the position information as well as the behavior event into the speech model for processing to obtain the inquiry speech information.

In a fourth aspect, according to one or more embodiments of the present disclosure, there is provided a headset provided with a sensor, including:
an obtaining unit configured to obtain first measurement data acquired by the sensor in a case where a user wears the headset;
a determining unit configured to determine a behavior event of the user according to the first measurement data;
a processing unit configured to input the behavior event into a pre-trained speech model for processing to obtain inquiry speech information; and
a playing unit configured to play the inquiry speech information.

According to one or more embodiments of the present disclosure, the headset includes: one of a head-mounted display, earphones provided with cameras, or eyeglasses provided with cameras.

In a fifth aspect, according to one or more embodiments of the present disclosure, there is provided a headset provided with a sensor, including:
an obtaining unit configured to obtain first measurement data acquired by the sensor in a case where a user wears the headset;
a determining unit configured to determine a behavior event of the user according to the first measurement data;
a sending unit configured to send the behavior event to a mobile terminal;
a receiving unit configured to receive inquiry speech information sent from the mobile terminal, where the inquiry speech information is determined by the mobile terminal according to the behavior event; and
a playing unit configured to play the inquiry speech information.

In a sixth aspect, according to one or more embodiments of the present disclosure, there is provided a speech playing apparatus, applied to a mobile terminal, including:
a receiving unit configured to receive a behavior event sent from a headset;
a processing unit configured to input the behavior event into a pre-trained speech model for processing to obtain inquiry speech information; and
a sending unit configured to send the inquiry speech information to the headset.

In a seventh aspect, according to one or more embodiments of the present disclosure, there is provided an electronic device, including: at least one processor and a memory,
where the memory has therein stored computer-executable instructions; and
the at least one processor executes the computer-executable instructions stored in the memory to cause the at least one processor to perform the speech playing method according to the above various possible designs of the first to third aspects.

In an eighth aspect, according to one or more embodiments of the present disclosure, there is provided a computer-readable storage medium having therein stored computer-executable instructions which, when executed by the processor, implement the speech playing method according to the above various possible designs of the first to third aspects.

In a ninth aspect, according to one or more embodiments of the present disclosure, there is provided a computer program product, including a computer program which, when executed by a processor, implements the speech playing method according to the above various possible designs of the first to third aspects.

The foregoing description is only illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms in which the claims are implemented.

## Claims

1. A speech playing method, applied to a headset provided with a sensor, comprising:
obtaining first measurement data acquired by the sensor in a case where a user wears the headset (S201);
determining a behavior event of the user according to the first measurement data (S202);
inputting the behavior event into a pre-trained speech model for processing to obtain inquiry speech information (S203); and
playing the inquiry speech information (S204).

2. The speech playing method according to claim 1, wherein:
the sensor comprises an inertial measurement unit, and the first measurement data comprises first inertial measurement data;
and/or
the behavior event is input to the speech model as a prompt.

3. The speech playing method according to claim 1 or 2, wherein:
the speech model is capable of recording context information of the user, and the inputting the behavior event into the pre-trained speech model for processing to obtain the inquiry speech information comprises: processing, by the speech model, the behavior event to obtain the inquiry speech information by using the context information, after the behavior event is input into the pre-trained speech model;
optionally
the context information of the user comprises historical speech information and/or a historical behavior event.

4. The speech playing method according to any of claims 1 to 3, wherein:
the headset is deployed with a camera, and the inputting the behavior event into the pre-trained speech model for processing to obtain the inquiry speech information comprises: obtaining position information of the user or a first image acquired by the camera; and inputting the first image and/or the position information as well as the behavior event into the speech model for processing to obtain the inquiry speech information;
optionally
the determining the behavior event of the user according to the first measurement data comprises: determining the behavior event of the user according to the first image and the first measurement data.

5. The speech playing method according to any of claims 1 to 4, wherein the determining the behavior event of the user according to the first measurement data, comprises:
obtaining second measurement data acquired by a mobile terminal which is carried by the user; and
determining the behavior event of the user according to the first measurement data and the second measurement data.

6. The speech playing method according to any of claims 1 to 5, wherein the speech playing method further comprises, after the playing the inquiry speech information:
obtaining reply information of the user for the inquiry speech information; and
determining target data according to the reply information, and playing the target data.

7. The speech playing method according to claim 6, wherein the obtaining the reply information of the user for the inquiry speech information comprises:
obtaining third measurement data acquired by the sensor, determining a head action of the user according to the third measurement data, and determining the reply information of the user for the inquiry speech information according to the head action; or
acquiring speech information of the user as the reply information.

8. The speech playing method according to claim 6, wherein the playing the target data comprises:
determining a playing volume according to the behavior event; and
playing the target data according to the playing volume.

9. The speech playing method according to claim 8, wherein:
the determining the playing volume according to the behavior event comprises: obtaining noise data of a current environment; and determining the playing volume according to the noise data and the behavior event;
and/or
the headset is deployed with a camera, and the determining the playing volume according to the behavior event comprises: determining a head-turning event of the user according to the first measurement data and/or a first image acquired by the camera; and determining the playing volume according to the head-turning event and the behavior event.

10. A speech playing method, applied to a headset provided with a sensor, comprising:
obtaining first measurement data acquired by the sensor in a case where a user wears the headset (S401);
determining a behavior event of the user according to the first measurement data (S402);
sending the behavior event to a mobile terminal (S403);
receiving inquiry speech information sent from the mobile terminal, wherein the inquiry speech information is determined by the mobile terminal according to the behavior event (S404); and
playing the inquiry speech information (S405).

11. The speech playing method according to claim 10, wherein the headset is deployed with a camera, and the speech playing method further comprises:
obtaining a first image acquired by the camera; and
sending the first image to the mobile terminal, wherein the inquiry speech information is determined by the mobile terminal according to the behavior event and the first image.

12. A speech playing method, applied to a mobile terminal, comprising:
receiving a behavior event sent from a headset (S501);
inputting the behavior event into a pre-trained speech model for processing to obtain inquiry speech information (s502); and
sending the inquiry speech information to the headset (S503).

13. The speech playing method according to claim 12, wherein the inputting the behavior event into the pre-trained speech model for processing to obtain the inquiry speech information comprises:
obtaining position information of a user;
receiving a first image sent from the headset, wherein the first image is acquired by a camera on the headset; and
inputting the first image and/or the position information as well as the behavior event into the speech model for processing to obtain the inquiry speech information.

14. An electronic device (90), comprising: a processor and a memory,
wherein the memory has therein stored computer-executable instructions; and
the processor executes the computer-executable instructions stored in the memory to cause the processor to perform the speech playing method according to any of claims 1 to 13.

15. A computer-readable storage medium has therein stored computer-executable instructions which, when executed by a processor, implement the speech playing method according to any of claims 1 to 13.

## Amended claims

### Amended claims in accordance with Rule 137(2) EPC.

1. A speech playing method, applied to a headset provided with a sensor and deployed with a camera, comprising:
obtaining first measurement data acquired by the sensor in a case where a user wears the headset (S201) and obtaining a first image acquired by the camera, wherein the first image comprises an environment wherein the user is located;
determining a behavior event of the user according to the first measurement data (S202);
inputting the behavior event into a pre-trained speech model for processing to obtain inquiry speech information (S203), comprising: inputting the first image and the behavior event into the speech model for processing to obtain the inquiry speech information; and
playing the inquiry speech information (S204).

2. The speech playing method according to claim 1, wherein:
the sensor comprises an inertial measurement unit, and the first measurement data comprises first inertial measurement data;
and/or
the behavior event is input to the speech model as a prompt.

3. The speech playing method according to claim 1 or 2, wherein:
the speech model is capable of recording context information of the user, and the inputting the behavior event into the pre-trained speech model for processing to obtain the inquiry speech information comprises: processing, by the speech model, the behavior event to obtain the inquiry speech information by using the context information, after the behavior event is input into the pre-trained speech model;
optionally
the context information of the user comprises historical speech information and/or a historical behavior event.

4. The speech playing method according to any of claims 1 to 3, wherein:
the inputting the behavior event into the pre-trained speech model for processing to obtain the inquiry speech information comprises: obtaining position information of the user or a first image acquired by the camera; and inputting the position information as well as the behavior event into the speech model for processing to obtain the inquiry speech information;
optionally
the determining the behavior event of the user according to the first measurement data comprises: determining the behavior event of the user according to the first image and the first measurement data.

5. The speech playing method according to any of claims 1 to 4, wherein the determining the behavior event of the user according to the first measurement data, comprises:
obtaining second measurement data acquired by a mobile terminal which is carried by the user; and
determining the behavior event of the user according to the first measurement data and the second measurement data.

6. The speech playing method according to any of claims 1 to 5, wherein the speech playing method further comprises, after the playing the inquiry speech information:
obtaining reply information of the user for the inquiry speech information; and
determining target data according to the reply information, and playing the target data.

7. The speech playing method according to claim 6, wherein the obtaining the reply information of the user for the inquiry speech information comprises:
obtaining third measurement data acquired by the sensor, determining a head action of the user according to the third measurement data, and determining the reply information of the user for the inquiry speech information according to the head action; or
acquiring speech information of the user as the reply information.

8. The speech playing method according to claim 6, wherein the playing the target data comprises:
determining a playing volume according to the behavior event; and
playing the target data according to the playing volume.

9. The speech playing method according to claim 8, wherein:
the determining the playing volume according to the behavior event comprises: obtaining noise data of a current environment; and determining the playing volume according to the noise data and the behavior event;
and/or
the headset is deployed with a camera, and the determining the playing volume according to the behavior event comprises: determining a head-turning event of the user according to the first measurement data and/or a first image acquired by the camera; and determining the playing volume according to the head-turning event and the behavior event.

10. A speech playing method, applied to a headset provided with a sensor and deployed with a camera,, comprising:
obtaining first measurement data acquired by the sensor in a case where a user wears the headset (S401) and obtaining a first image acquired by the camera, wherein the first image comprises an environment wherein the user is located;
determining a behavior event of the user according to the first measurement data (S402);
sending the behavior event to a mobile terminal (S403) and sending the first image to the mobile terminal;
receiving inquiry speech information sent from the mobile terminal, wherein the inquiry speech information is determined by the mobile terminal according to the behavior event (S404) and the first image; and
playing the inquiry speech information (S405).

11. A speech playing method, applied to a mobile terminal, comprising:
receiving a behavior event sent from a headset (S501) and receiving a first image sent from the headset, wherein the first image is acquired by a camera on the headset, and the first image comprises an environment wherein the user is located;
inputting the behavior event into a pre-trained speech model for processing to obtain inquiry speech information (S502), comprising: inputting the first image and the behavior event into the speech model for processing to obtain the inquiry speech information; and
sending the inquiry speech information to the headset (S503).

12. The speech playing method according to claim 11, wherein the inputting the behavior event into the pre-trained speech model for processing to obtain the inquiry speech information comprises:
obtaining position information of a user; and
inputting the position information as well as the behavior event into the speech model for processing to obtain the inquiry speech information.

13. An electronic device (90), comprising: a processor and a memory,
wherein the memory has therein stored computer-executable instructions; and
the processor executes the computer-executable instructions stored in the memory to cause the processor to perform the speech playing method according to any of claims 1 to 12.

14. A computer-readable storage medium has therein stored computer-executable instructions which, when executed by a processor, implement the speech playing method according to any of claims 1 to 12.
